# EUROPEAN PATENT SPECIFICATION

(11) **EP 2 934 976 B1**
(45) Date of publication and mention of the grant of the patent: **15.05.2019**
(21) Application number: 13770583.6
(22) Date of filing: 13.09.2013
(51) Int. Cl.: B60W 10/02, B60W 10/18, B60W 30/18, B60W 10/11, B60K 26/02

(54) **SYSTEM AND METHOD FOR CONTROLLING THE OPERATION OF A WORK VEHICLE HAVING A POWER SHIFT TRANSMISSION AND A PROPORTIONAL PARKING BRAKE**
SYSTEM UND VERFAHREN ZUR STEUERUNG DES BETRIEBS EINES ARBEITSFAHRZEUGS MIT EINEM LASTSCHALTGETRIEBE UND PROPORTIONALER FESTSTELLBREMSE
SYSTÈME ET PROCÉDÉ PERMETTANT DE COMMANDER LE FONCTIONNEMENT D'UN VÉHICULE DE TRAVAIL QUI COMPORTE UNE TRANSMISSION DE CHANGEMENT DE PUISSANCE ET UN FREIN À MAIN PROPORTIONNEL

(30) Priority: 20.12.2012 US 201261740137 P
(43) Date of publication of application: 28.10.2015
(73) Proprietor: CNH Industrial America LLC, New Holland, PA 17557 (US)
(72) Inventor: BULGRIEN, Garth, Harvey, Ephrata, PA 17522 (US); KUROS, Pawel, Wood Dale, IL 60191 (US); DIX, Peter, J., Naperville, Illinois 60565 (US)
(74) Representative: CNH Industrial IP Department
(86) International application number: PCT/US2013/059654
(87) International publication number: WO 2014/099060

(56) References cited:
- DE-A1- 1 926 592
- JP-A- H04 231 223
- US-A- 5 288 140
- US-A1- 2004 067 818
- US-B1- 6 401 899
- US-B1- 6 704 637

## Description

### FIELD OF THE INVENTION

The present subject matter relates generally to work vehicles and, more particularly, to a system and method for controlling the operation of a work vehicle having a power shift transmission.

### BACKGROUND OF THE INVENTION

Typically, work vehicles, such as tractors and other agricultural vehicles, have a continuously variable transmission (CVT) or a power shift transmission (PST). Conventionally, each type of transmission provides certain advantages and disadvantage as compared to the other. In particular, CVTs typically allow for the use of enhanced input features that simplify operator control of the vehicle. For example, to achieve a desired vehicle speed with a work vehicle having a PST, an operator is required to input both a gear selection and engine speed. In contrast, for a work vehicle having a CVT, an operator may simply provide a speed command corresponding to the desired vehicle speed. Moreover, CVTs typically form part of a closed-loop system that automatically adjusts the transmission ratio to allow for exact control of the vehicle speed. Thus, once the operator has provided the speed command via a suitable input device, the CVT may be automatically controlled to maintain the desired vehicle speed. On the other hand, to maintain the desired vehicle speed with a PST, the operator must manually adjust the gear and/or engine speed as the loading conditions on the work vehicle change.

However, while easy to operate, CVTs are often more expensive and less efficient than PSTs. For example, to provide a continuously variable gear ratio, CVTs must include a hydrostatic pump and motor, which are typically relatively inefficient components. Additionally, to offset such inefficiencies, CVTs often require complex transmission architectures, thereby increasing the costs and complexity of the transmission. In contrast, PSTs include purely mechanical transmission architectures that are relatively efficient and cost effective. Accordingly, it would be desirable to have a work vehicle including an efficient, cost-effective PST that also has one or more of the control features of a CVT in order to simply operator control of the vehicle.

Additionally, PSTs often include a parking brake having a spring applied, hydraulic release design. However, the supply of hydraulic fluid to the parking brake is typically controlled via an on/off valve. As such, the parking brake may not be efficiently and accurately used to control the speed of a work vehicle when the vehicle is coming to a stop or taking off from zero. Moreover, conventional parking brakes for PSTs are typically not designed to slow and/or stop a vehicle moving at high speeds. Rather, such parking brakes are design to be applied only after the vehicle has come to a stop. Thus, it would be desirable to have work vehicle including a parking brake that may be used to control the deceleration rate of the vehicle and/or that may be used to enhance vehicle take offs. DE1926592 showing the features of the preamble of claims 1 and 9 discloses a method to control the clutch to initially reduce the vehicle speed.

### BRIEF DESCRIPTION OF THE INVENTION

Aspects and advantages of the invention will be set forth in part in the following description, or may be obvious from the description, or may be learned through practice of the invention.

The present invention relates to a method and system as defined by the independent claims.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a side view of one embodiment of a work vehicle;
FIG. 2 illustrates a schematic diagram of one embodiment of a power shift transmission suitable for use with the work vehicle shown in FIG. 1;
FIG. 3 illustrates a schematic diagram of one embodiment of a system for controlling the operation of a work vehicle in accordance with aspects of the present subject matter;
FIG. 4 illustrates a flow diagram of one embodiment of a method for controlling the operation of a work vehicle in accordance with aspects of the present subject matter;
FIG. 5 illustrates a simplified, side view of one embodiment of a suitable input device that may be utilized with the disclosed system; and
FIG. 6 illustrates a top, perspective view of the input device shown in FIG. 5, particularly illustrating various input features located on a handle of the input device.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention as defined by the appended claims.

In general, the present subject matter is directed to systems and methods for controlling the operation of a work vehicle. Specifically, in several embodiments, the disclosed system may be utilized to simplify operator control of a work vehicle including a power shift transmission. For example, the disclosed system may allow for an operator to control vehicle operation by providing a vehicle speed command instead of requiring the operator to select an engine speed and a gear. In one embodiment, the vehicle speed command may be provided using a speed command lever configured to permit the operator to manually or automatically adjust the commanded vehicle speed.

Additionally, in several embodiments, the work vehicle may include a proportional parking brake configured to provide a means for automatically stop the vehicle. For example, if the operator provides a speed command instructing the vehicle controller to reduce the vehicle speed to zero, the controller may initially control the transmission and/or the engine to reduce the speed of the vehicle. Thereafter, the parking brake may be proportionally applied to allow for a controlled deceleration of the vehicle. As such, vehicle may be stopped without the need for the operator to use both feet in depressing the clutch pedal and applying the service brakes. Moreover, since the parking brake is applied, the work vehicle may come to a stop and hold its position, thereby creating a "powered zero" condition to prevent the vehicle from rolling back when on a hill.

Moreover, the capability to proportionally apply the parking brake may also provide a means for taking off more smoothly. Specifically, in conventional work vehicles that simply include on/off parking brake control, the operator must slowly release the clutch pedal, release the brake and increase the throttle to take off from zero. Unfortunately, if the work vehicle is on a hill, the vehicle may roll backwards if the brake and/or the clutch are released too early. By providing proportional parking brake control, the parking brake may be gradually disengaged while the transmission is gradually engaged to provide for a smooth take off.

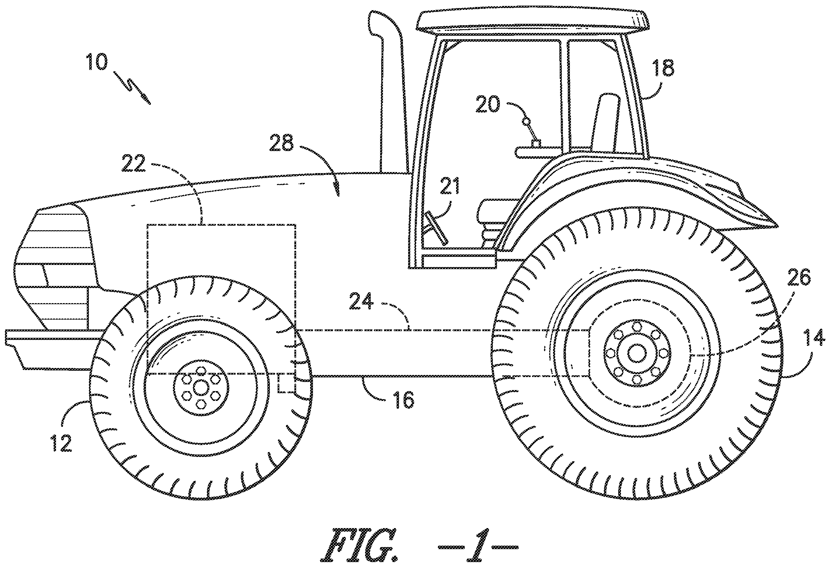

Referring now to the drawings, FIG. 1 illustrates a side view of one embodiment of a work vehicle 10. As shown, the work vehicle 10 is configured as an agricultural tractor. However, in other embodiments, the work vehicle 10 may be configured as any other suitable work vehicle known in the art, such as various other agricultural vehicles, earth-moving vehicles, loaders and/or various other off-road vehicles.

As shown in FIG. 1, the work vehicle 10 includes a pair of front wheels 12, a pair or rear wheels 14 and a chassis 16 coupled to and supported by the wheels 12, 14. An operator's cab 18 may be supported by a portion of the chassis 16 and may house various input devices, such as a control lever 20 and a service brake pedal 21, for permitting an operator to control the operation of the work vehicle 10. Additionally, the work vehicle 10 may include an engine 22 and a transmission 24 mounted on the chassis 16. The transmission 24 may be operatively coupled to the engine 22 (e.g., via a damping coupler) and may provide variably adjusted gear ratios for transferring engine power to the wheels 14 via a differential 26. The engine 22, transmission 24, and differential 26 may collectively define a drive train 28 of the work vehicle 10.

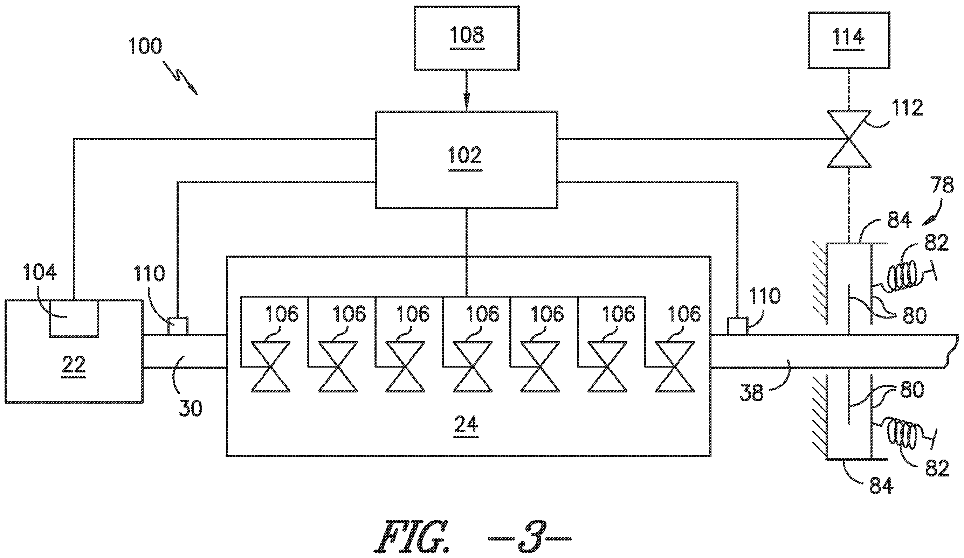

It should be appreciated that the transmission 24 may generally comprise any suitable transmission known in the art having a plurality of different, fixed gear ratios. For example, in several embodiments, the transmission 24 may comprise a multispeed, power shift transmission having a plurality of selectable gear ratios (e.g., a plurality of selectable forward and reverse gear ratios) and a plurality of hydraulically actuated clutches that may be selectively actuated in order to engage the transmission in the differing gear ratios. In such embodiments, the clutches may be configured to be automatically engaged within the transmission 24. For instance, an electronic controller 102 of the work vehicle 10 (described below with reference to FIG. 3) may be configured to transmit suitable control commands or signals to the transmission 24 instructing it to actuate hydraulic pistons or other suitable actuators configured to engage/disengage the clutches.

It should also be appreciated that the configuration of the work vehicle 10 described above and shown in FIG. 1 is provided only to place the present subject matter in an exemplary field of use. Thus, it should be appreciated that the present subject matter may be readily adaptable to any manner of work vehicle configuration. Additionally, although not shown, the work vehicle 10 may also be configured to be operatively coupled to any suitable type of work implement, such as a trailer, spray boom, manure tank, feed grinder, plow and/or the like.

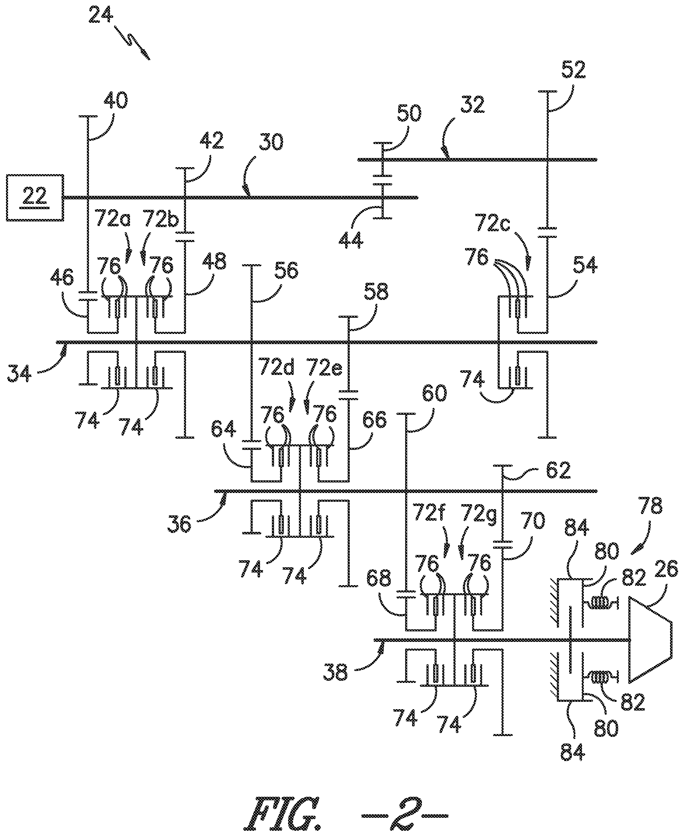

Referring now to FIG. 2, a simplified, schematic diagram of one embodiment of a power shift transmission 24 suitable for use with the work vehicle 10 described above is illustrated in accordance with aspects of the present subject matter. As shown, the transmission 24 includes a plurality of shafts extending parallel to one another. For example, the transmission 24 may include an input shaft 30 operatively connected to and driven by the engine 22. The transmission 24 may also include a counter shaft 32 extending parallel to the input shaft 30 for facilitating the reverse gear ratios of the transmission 24. In addition, the transmission 24 may include a plurality of driven shafts 34, 36, 38 extending parallel to the input and counter shafts 30, 32, with the driven shafts 34, 36, 38 forming different levels of direct gear engagements for adjusting the gear ratio of the transmission 24. For instance, as shown in the illustrated embodiment, the transmission 24 includes a first driven shaft 34 forming a first level of direct gear engagements, a second driven shaft 36 forming a second level of direct gear engagements and a third driven shaft 38 (i.e., an output shaft coupled to the differential 26) forming a third level of direct gear engagements. However, in alternative embodiments, the transmission 24 may include any other number of driven shafts forming a corresponding number of direct gear engagement levels. For example, in various embodiments, the transmission 24 may only include two driven shafts forming two levels of direct gear engagements or the transmission 24 may include four or more driven shafts forming four or more levels of direct gear engagements.

Moreover, the transmission 24 may also include a plurality of gears installed on the parallel shafts 30, 32, 34, 36, 38. For example, as shown in the illustrated embodiment, the transmission 24 includes eight pairs of gears configured to provide eight forward gear ratios and four reverse ratios. Specifically, as shown in FIG. 2, the transmission 24 may include a first input gear 40, a second input gear 42 and a third input gear 44 mounted to the input shaft 30. The first input gear 40 may drive a first forward gear 46 configured to be selectively engaged with the first driven shaft 34. Similarly, the second input gear 42 may drive a second forward gear 48 configured to be selectively engaged with the first driven shaft 34. The third input gear 44 may generally be configured to drive the counter shaft 32. For example, as shown in FIG. 2, the counter shaft 32 may include a first counter gear 50 and a second counter gear 52 mounted thereon, with the first counter gear 50 being driven by the third input gear 44. The second counter gear 52 may, in turn, drive a reverse gear 54 configured to be selectively engaged with the first driven shaft 34.

Additionally, the transmission 24 may include first and second drive gears 56, 58 mounted to the first driven shaft 34 and third and fourth drive gears 60, 62 mounted to the second driven shaft 36. The drive gears 56, 58, 60, 62 may generally be adapted to drive corresponding driven gears 64, 66, 68, 70 configured to be selectively engaged with the second and third driven shafts 36, 38. For example, as shown in the illustrated embodiment, the first drive gear 56 may drive a first driven gear 64 configured to be selectively engaged with the second driven shaft 36 and the second drive gear 58 may drive a second driven gear 66 configured to be selectively engaged with the second driven shaft 36. Similarly, the third drive gear 60 may drive a third driven gear 68 configured to be selectively engaged with the third driven shaft 38 and the fourth drive gear 62 may drive a fourth driven gear 70 configured to be selectively engaged with the third driven shaft 38.

It should be appreciated that, in alternative embodiments, the transmission 24 may include any other number of gear pairs configured to provide any suitable number of forward and reverse gear ratios. For instance, in some work vehicles, it may be desirable for the transmission 24 to include a larger number of gear pairs, thereby providing a larger number of forward and/or reverse gear ratios (e.g., 18 or more forward ratios), to accommodate a wide variety of loading conditions.

Moreover, as shown in FIG. 2, the transmission 24 may also include a plurality of hydraulically actuated clutches 72 (e.g., clutches 72a, 72b, 72c, 72d, 72e, 72f and 72g) for engaging the gear pairs with the driven shafts 34, 36, 38. Specifically, each clutch 72 may be associated with one of the gears configured to be selectively engaged with one of the driven shafts 34, 36, 38 (e.g., clutch 72a for the first forward gear 46, clutch 72b for the second forward gear 48, clutch 72c for the reverse gear 54, and clutches 72d, 72e, 72f and 72g for the first, second, third and fourth driven gears 64, 66, 68, 70, respectively). In several embodiments, each clutch 72 may include one or more hydraulic pistons or other suitable hydraulic actuators 74 configured to engage corresponding friction plates 76 coupled to both the gear and the driven shaft. Thus, when pressurized hydraulic fluid is supplied within the clutch 72, the friction plates 76 may be pressed together such that the plates 76 frictionally and rotationally engage one another, thereby permitting torque to be transmitted between two of the parallel shafts 30, 32, 34, 36, 38. For example, by actuating the clutch 72a associated with the first forward gear 46, torque may be transmitted from the input shaft 30 to the first driven shaft 34 via the gear pair including the first input gear 40 and the first forward gear 46. Similarly, torque may be transmitted from the first driven shaft 34 to the second driven shaft 36 and from the second driven shaft 36 to the third driven shaft 38 by actuating one of the clutches 72 associated with each of such driven shafts 36, 38 (e.g., clutches 72d, 72e, 72f, 72g). Thus, by varying the combination of actuated clutches 72 within the transmission 24 (i.e., one clutch 72 per driven shaft 34, 36, 38), the transmission 24 may be engaged in various different gear ratios

Additionally as shown in FIG. 2, the transmission 24 may also include a parking brake 78 operatively connected to the output shaft 38. In several embodiments, the parking brake 78 may be configured as a spring applied, hydraulic release brake. For example, as shown in FIG. 2, the parking brake 78 may include one or more brake plates 80 configured to be biased into engagement with one another via one or more springs 82. Additionally, the parking brake 78 may include one or more hydraulic actuators 84 configured to compress or release the spring(s) 82. Specifically, as the pressure of the hydraulic fluid supplied to the actuator(s) 84 is increased, the actuator(s) 84 may compress the spring(s) 82 to relieve the pressure on the brake plates 80, thereby disengaging the parking brake 78. However, as the pressure of the hydraulic fluid supplied to the actuator(s) 84 in decreased, the pressure applied to the spring(s) 82 may be released such that the spring(s) 82 may again push against the brake plates 80 and engage the parking brake 78. Thus, contrary to the various clutches 72 of the transmission 24, the parking brake 78 may be designed such that it is engaged when the pressure within the brake 78 is reduced and disengaged when the pressure within the brake 78 is increased. Additionally, as will be described below, the pressure supplied to the hydraulic actuators 84 may be regulated using a suitable automatic valve (e.g., a proportional pressure reducing valve) to allow the parking brake 78 to be proportionally or gradually applied or engaged as well as proportionally released or disengaged.

It should be appreciated that , by configuring the parking brake 78 as a spring applied, hydraulic release brake, the parking brake 78 may be applied or engaged even when the work vehicle 10 is not functioning properly. For example, if the vehicle controller is not powered or is otherwise not functioning or if there is a hydraulic leak, the parking brake 78 may be automatically engaged via the spring(s) 82 to allow the vehicle 10 to be stopped.

Referring now to FIG. 3, a schematic diagram of one embodiment of a system 100 for controlling the operation of a work vehicle 10 is illustrated in accordance with aspects of the present subject matter. As shown, the system 100 may include a controller 102 configured to control the operation of various components of the work vehicle 10, such as the engine 22, the transmission 27 and/or the parking brake 78 of the work vehicle 10. For example, the controller 102 may be communicatively coupled to an engine governor 104 in order to control and/or monitor the speed of the engine 22. Similarly, the controller 102 may be communicatively coupled to one or more transmission valves in order to control the pressure of the hydraulic fluid supplied within the transmission 24, thereby permitting the controller 102 to control the engagement and/or disengagement of the various clutches 72 of the transmission 24. For example, the controller 102 may be configured to individually regulate the pressure of the hydraulic fluid supplied within each clutch 72 by controlling the operation of an individual clutch valve 106 (e.g., a proportional valve) associated with each hydraulic actuator 74.

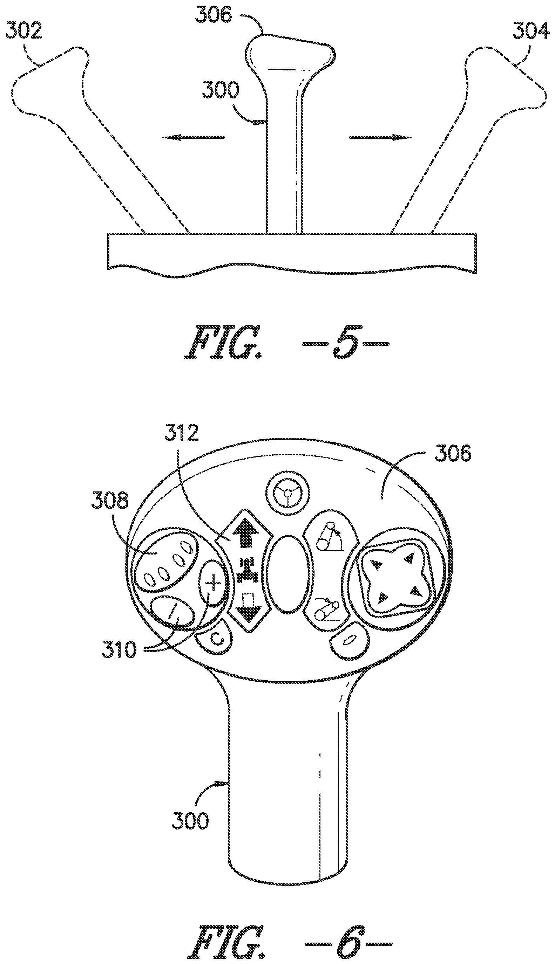

The system 100 may also include one or more input devices 108 communicatively coupled to the controller 102 to allow for operator inputs to be provided to the system 100. For example, as will be described below with reference to FIGS. 5 and 6, at least one of the input devices 108 may be a control lever 300 configured to permit an operator to input a speed command corresponding to a desired vehicle speed of the work vehicle 10. Upon receipt of the speed command, the controller 102 may be configured to control the various components of the work vehicle 10 to achieve the commanded vehicle speed. For example, the controller 102 may be configured to regulate the engine speed and/or the transmission ratio to adjust the speed of work vehicle 10 to the commanded vehicle speed. Additionally, as will be described below, the controller 102 may also be configured to proportionally control the torque applied by the parking brake 78 in order to regulate the speed of the vehicle 10.

Moreover, the system 100 may also include one or more sensors 110 configured to monitor the rotational speeds of one or more of the shafts 30, 32, 34, 36, 38 of the transmission 24. For example, as shown FIG. 3, one or more speed sensors 110 (e.g., shaft encoders, shaft sensors and/or any other suitable speed sensors) may be mounted to and/or within the input shaft 30 and the output shaft 38 so as to measure the input speed and the output speed of the transmission 24. The speed sensors 110 may, in turn, be communicatively coupled to the controller 102 to permit the speed measurements to be transmitted to the controller 12 for subsequent processing and/or analysis.

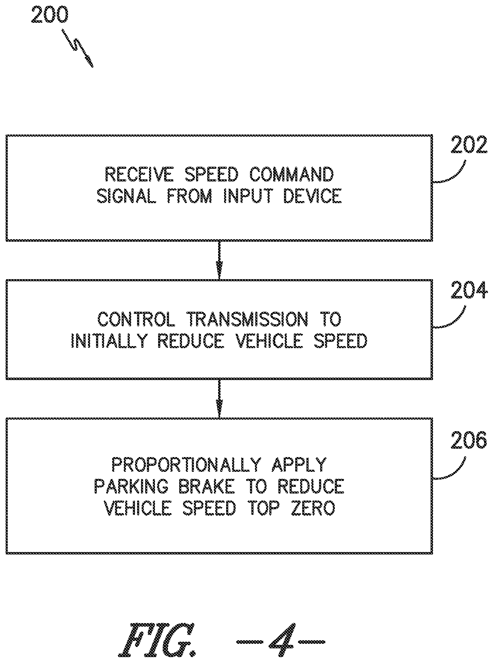

It should be appreciated that the controller 102 may generally comprise any suitable computer and/or other processing unit, including suitable combinations of computers and/or other processing units. Thus, in several embodiments, the controller 102 may include one or more processor(s) and associated memory device(s) configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) of the controller 102 may generally comprise memory element(s) including, but are not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) may generally be configured to store suitable computer-readable instructions that, when implemented by the processor(s), configure the controller 102 to perform various computer-implemented functions, such as by performing the steps and/or calculations of the method described below with reference to FIG. 4. In addition, the controller 102 may also include various other suitable components, such as a communications circuit or module, one or more input/output channels for receiving input signals (e.g., from the sensors 110) and/or for transmitting control signals and/or the like.

Referring still to FIG. 3, the disclosed system 100 may also include one or more components for regulating the pressure of the hydraulic fluid supplied within the parking brake 78. For example, as shown in the illustrated embodiment, the system 100 may include a brake valve 112 in fluid communication with a suitable hydraulic fluid source 114. The brake valve 112 may be communicatively coupled to the controller 102 such that the operation of the valve 112 may be electronically controlled in order to regulate the pressure of the hydraulic fluid supplied to the hydraulic actuator(s) 84 of the parking brake 78. Thus, it should be appreciated that the brake valve 112 may generally comprise any suitable electronic valve that may be configured to provide a variable pressure output. For example, in one embodiment, the brake valve 112 may comprise a solenoid activated proportional valve or any other suitable variable pressure control valve.

By controlling the operation of the brake valve 112, the controller 102 may be configured to regulate the particular pressure at which the hydraulic fluid is supplied to hydraulic actuator(s) 84, thereby providing a means to proportionally control the amount of torque applied through the parking brake 78 to the output shaft 38 of the transmission 24. As such, the parking brake 78 may be used to carefully regulate the speed of the work vehicle 10. For example, as will be described below, the parking brake 78 may be gradually engaged (e.g., by gradually reducing the pressure supplied within the brake 78) to provide a controlled deceleration of the work vehicle 10. Similarly, when the work vehicle 10 is taking off from zero, the parking brake 78 may be gradually disengaged (e.g., by gradually increasing the pressure supplied within the brake 78) to allow for a smooth, controlled take off of the work vehicle 10.

It should be appreciated that, as an alternative to configuring the parking brake 78 as a spring applied, hydraulic release brake, the parking brake 78 may have any other suitable configuration that allows it to be electronically and proportionally controlled. For example, in one embodiment, an electric motor may be utilized to apply and/or release the parking brake 78. In such an embodiment, a suitable open or closed-loop feedback mechanism may be utilized to achieve proportional control. For instance, the controller 102 may be configured to monitor the current in the motor using a suitable sensor. Such current measurements may then be correlated to the force being applied by the motor to disengage and/or engage the parking brake 78.

It should also be appreciated that the solid lines extending from the controller 102 in FIG. 3 represent electrical connections connecting the controller to the various components of the work vehicle 10, such as the engine governor 104, the transmission valves 106, the sensors 110 and the brake valve 112. Similarly, the dashed lines extending between the hydraulic fluid source 114 and the brake valve 112 and between the brake valve 112 and the parking brake 78 represent fluid flow between such components. Although not shown in FIG. 3, it should be readily appreciated by those of ordinary skill in the art that the transmission valves 114 may also be in fluid communication with a suitable hydraulic fluid source (e.g., source 114). Additionally, the arrow extending between the input device(s) 108 and the controller 102 represent input commands (e.g., speed commands) that may be provided to the controller 102 via the input device(s) 108.

Referring now to FIG. 4, a flow diagram of one embodiment of a method 200 for controlling the operation of the work vehicle 10 is illustrated in accordance with aspects of the present subject matter. In particular, the method 200 provides an automatic means for stopping a work vehicle 10 by utilizing proportional control of the parking brake 78 to reduce the speed of the vehicle 10 to zero.

As shown in FIG. 4, at 202, a speed command signal may be received by the controller 102 from an input device 108 instructing the controller 102 to reduce the speed of the work vehicle 10 to zero. For example, as indicated above, the controller 102 may be communicatively coupled to one or more input devices that allow an operator to provide a speed command corresponding to a desired vehicle speed for the work vehicle 10. Thus, when it is desired to reduce the vehicle speed to zero, the operator may simply provide such input to the controller 102 via the input device(s) 108.

For instance, FIGS. 5 and 6 illustrate one embodiment of a suitable control lever 300 that may be utilized by an operator in accordance with aspects of the present subject matter to provide vehicle speed commands to the controller 102. In several embodiments, the control lever 300 may permit the operator to adjust the commanded vehicle speed by manually adjusting the position of the lever 300. For example, as particularly shown in FIG. 5, in one embodiment, the lever 300 may be biased to a neutral or central position by a spring or other suitable biasing mechanism. In such an embodiment, by pushing/pulling the lever 300 forward or aft of the central position, the commanded vehicle speed may be increased or decreased, respectively. Specifically, the vehicle 10 may be accelerated by pushing the lever 300 forward, with the acceleration rate being increased as the lever 300 is moved from the central position towards a fully forward position (indicated by dashed lines 302). Thereafter, when the lever 300 is released and returns to the central position, the commanded vehicle speed may correspond to the then current speed of the work vehicle 10. Similarly, the vehicle 10 may be decelerated by pulling the lever 300 backwards, with the deceleration rate being increased as the lever 300 is moved from the central position towards a fully aft position (indicated by dashed lines 304). Again, when the lever 300 is released and returns to the central position, the commanded vehicle speed may correspond to the then current speed of the work vehicle 10. In such an embodiment, the commanded vehicle speed may be limited to a certain speed range. For example, the maximum value for the commanded speed range may correspond to a maximum speed of the work vehicle 10 or a maximum pre-set speed provided by the operator. Similarly, the minimum value for the commanded speed may correspond to a vehicle speed of zero, a minimum vehicle speed when the transmission 24 is engaged its lowest gear and the engine 22 is operating at its lowest speed or a minimum pre-set speed provided by the operator. Thus, in one embodiment, to instruct the controller 102 to reduce the speed of the vehicle 10 to zero, the operator may simply pull the lever 300 backwards towards the fully aft position 304 to control the deceleration rate of the work vehicle 10 until it is brought to a stop.

As an alternative to configuring the lever 300 to return to the central position, it should be appreciated that the lever may be configured to be held in position (e.g., via friction) as it is moved between the fully forward and fully aft positions 302, 304 to adjust the commanded speed of the work vehicle 10. In such an embodiment, the speed range for commanded vehicle speed may be defined between the fully forward and fully aft positions 302, 304. For example, to command the maximum speed value for the range, the lever 300 may be moved to the fully forward position 302. Similarly, to command the minimum speed value of the range (e.g., a zero speed command), the lever 300 may be moved to the fully aft position 304.

Additionally, as particularly shown in FIG. 6, the lever 300 may also include a handle 306 having a plurality of input features for providing operator inputs to the controller 102. In several embodiments, the input features may be configured to allow the operator to automatically adjust a speed setting of the work vehicle 10. For example, as shown in FIG. 6, the handle 306 may include a thumbwheel 208 or any other suitable input feature configured to allow the operator to incrementally adjust the maximum and/or the minimum speed value settings associated with the fully forward and/or fully aft positions 302, 304 of the lever 300. In such an embodiment, the current speed value settings may be displayed to the operator via a suitable display screen or control panel positioned within the operator's cab 18. In addition, the handle 306 may include input buttons 310 (e.g., a "+" button and a "-" button) to control the selection of pre-set speed ranges corresponding to differing sets of maximum and/or minimum speed value settings associated with the lever 300. For example, in one embodiment, each speed range may vary from zero speed to a different maximum speed setting. The handle 306 may also include a forward/reverse toggle button 312 that allows the operator quickly change the direction of travel of the work vehicle 10 from forward to reverse or vice versa without the need to adjust a separate FNRP lever 10 (not shown) of the work vehicle 10. Moreover, as shown in FIG. 6, the handle 306 may include various other buttons and/or other input features to allow the operator to provide various other inputs to the controller 102.

It should also be appreciated that work vehicle 10 may include various other input devices 108. For example, in addition to the control lever 300 described above, the work vehicle 10 may also include a speed control pedal (not shown) that can be depressed to provide a vehicle speed command signal to the controller 102, which may be desirable when the vehicle 10 is being driven on a road during transport. In such an embodiment, the maximum of the two speed commands provided by the lever 300 and the pedal may be selected by the controller 102 as the commanded vehicle speed. Additionally, the work vehicle 10 may include a throttle (not shown) configured to permit the operator to manually control the engine speed or, in an automatic mode, to define a minimum or maximum target engine speed.

Referring back to FIG. 4, at 404, upon receipt of the speed command signal instructing the controller 102 to stop the work vehicle 10, the controller 102 may be configured to control the operation of the transmission 24 in order to initially reduce the vehicle speed. For example, in one embodiment, the controller 102 may be configured to downshift gears within the transmission 24 to initially reduce the vehicle speed. Specifically, as indicated above, the controller 102 may be configured to transmit suitable control signals to the clutch valves 106 in order to regulate the pressure supplied to one or more of the transmission clutches 72, thereby allowing the transmission 24 to be downshifted by engaging a different combination of gears. As an alternative to downshifting the transmission 24, the controller 102 may simply be configured slip one or more of the engaged transmission clutches 72 by reducing the pressure of the hydraulic fluid supplied to such clutch(es) 72, thereby resulting in a reduction in the vehicle speed.

It should be appreciated that, in addition to controlling the transmission 24, the controller may also be configured to control the engine 22 to assist in initially reducing the vehicle speed. For example, as indicated above, the controller 102 may be configured to control the operation of the engine governor 104 such that the engine speed may be reduced, thereby allowing for a reduction in the vehicle speed.

Additionally, at 406, the controller 102 may proportionally apply the parking brake 78 to reduce the vehicle speed to zero. Specifically, as indicated above, the controller 102 may be configured to proportionally apply the parking brake 78 by gradually reducing the pressure of the hydraulic fluid supplied within the parking brake 78 via the brake valve 112. As such, the parking brake torque may be gradually increased in a manner that provides a controlled deceleration of the vehicle 10. For instance, in several embodiments, the pressure within the parking brake 78 may be configured to be regulated in a closed-loop manner as a function of the transmission output speed. For example, as indicated above, a sensor 110 may be communicatively coupled to the controller 102 in order to provide speed measurements corresponding to the rotational speed of the transmission output shaft 38. Thus, based on the measurements provided by the sensor 110, the controller 102 may be configured to gradually increase the parking brake torque (e.g., by gradually decreasing the pressure supplied within the brake 78) to control the deceleration rate of the work vehicle.

In several embodiments, the proportional control of the parking brake 78 may be initiated when the vehicle speed is reduced to a predetermined limit. For example, as indicated at 404, the controller 102 may be configured to control the operation of the transmission 24 and/or the engine 22 to initially reduce the speed of the work vehicle 10. However, once the vehicle speed is reduced to the predetermined limit, the parking brake 78 may be proportionally applied further reduce the vehicle speed.

Moreover, the controller 102 may also be configured to provide a "quick dump" pulse to quickly reduce the pressure within the parking brake 78, thereby allowing the brake plates 80 to be quickly moved to or near the kiss point (i.e., the point at which the brake plates 80 begin to engage and torque is transmitted through the parking brake 78). The controller 102 may also be configured to regulate the pressure within the parking brake 78 according to various operator-selected settings, such as an "aggressiveness" setting (e.g., low, medium or high). For example, for a highly aggressive deceleration rate, the parking brake pressure may be initialized below the kiss point to immediately engage the parking brake 78 and transmit torque therethrough.

As indicated above, the proportional brake control may also be advantageously utilized when a work vehicle 10 is taking off from zero. Specifically, when the operator provides a speed command signal instructing the controller 102 to increase the vehicle speed from zero to a commanded speed (e.g., by pushing the control lever 300 in the direction of the fully forward position 302), the pressure within the parking brake 78 may be regulated such that the brake 78 is proportionally or gradually released as the on-coming clutch(es) 72 within the transmission 24 are engaged. Such control may generally allow for a smoother vehicle take off and may also prevent the vehicle 10 from rolling backwards on a hill as the transmission 24 is being engaged.

Moreover, the proportional brake control may also be advantageously utilized for inching operations (i.e., when small movements of the vehicle 10 are required). For example, to initiate an inching operation, the operator may provide a speed command signal instructing the controller 102 to increase the vehicle speed from zero to some minimum speed setting (e.g., the minimum vehicle speed when the transmission 24 is engaged in its lowest gear and the engine 22 is operating at its lowest speed). The transmission 24 may then slip the on-coming clutch(es) 72 to control the acceleration of the vehicle 10 to the commanded minimum speed. Thereafter, the operator may provide another speed command signal instructing the controller 102 the decrease the vehicle speed back to zero. In doing so, if the zero speed command signal is provided prior to the on-coming clutch(es) 72 being fully engaged (i.e., when the speed differential across the clutch(es) is equal to zero), the vehicle speed may be reduced prior to the previously commanded speed being achieved, thereby allowing for slower speeds for a short period of time and greater inching control. Regardless, when the zero speed command signal is received, the controller 102 may be configured to reduce the pressure within the on-coming clutch(es) as the parking brake 78 is proportionally applied to reduce the vehicle's speed back to zero. In such an embodiment, it may be desirable for the pressure within the parking brake 78 to be held at a point just above the kiss point for a short time after take off so that the brake 78 may be applied very quickly when the zero speed command signal is received, thereby allow for better inching control and system responsiveness.

It should be appreciated that the inching commands may be provided using any suitable input device. For example, the inching commands may be provided with the control lever 300 or the foot pedal described above. Alternatively, the commands may be provided using any other suitable input device. For instance, U.S. Pat. No. 8,224,540 (Dix et al.) entitled "Apparatus and Method for Inching Using a Continuously Variable Transmission" and filed December 14, 2009, the disclosure of which is hereby incorporated herein by reference in its entirety for all purposes, discloses the use of input buttons (e.g., forward and reverse buttons) or the FNRP lever to providing inching commands to the controller 102. Regardless, when the initial speed command is received, the controller 102 may be configured to control the pressure supplied to the on-coming clutch so that the clutch is slipped for a short period of time, thereby allowing a very slow speed to be achieved for such period of time. Thus, when the zero speed command is received, the on-coming clutch may be completely disengaged and the parking brake 78 may be quickly applied, thereby allowing for the vehicle 10 to be stopped after moving only a short distance. Such inching commands may then be repeated (in the forward or reverse directions) to allow for continued inching operations.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method for controlling the operation of a work vehicle including a power shift transmission, the method comprising:
- receiving, with a controller, a speed command signal from an input device (202), the speed command signal instructing the controller to reduce a vehicle speed of the work vehicle to zero;
- controlling at least one clutch of the power shift transmission in order to initially reduce the vehicle speed (204); and
**characterized in that** the method comprising the further step of
- proportionally applying a parking brake of the work vehicle to reduce the vehicle speed to zero (206).

2. The method of claim 1, wherein proportionally applying a parking brake (78) of the work vehicle (10) comprises regulating a pressure within the parking brake (78).

3. The method of claim 2, wherein the pressure within the parking brake (78) is regulated as a function of an output speed of the power shift transmission (24).

4. The method of claim 2, wherein the work vehicle (10) includes a proportional valve (106) configured to regulate the pressure within the parking brake (78).

5. The method of claim 1, further comprising:
- receiving an initial speed command signal instructing the controller (102) to increase the vehicle speed from zero;
- slipping an on-coming clutch of the power shift transmission (24) until the speed command signal is received instructing the controller (102) to reduce the vehicle speed to zero.

6. The method of claim 1, wherein controlling at least one clutch (72) of the power shift transmission (24) in order to reduce the vehicle speed comprises downshifting the power shift transmission (24).

7. The method of claim 1, wherein controlling at least one clutch (72) of the power shift transmission (24) in order to reduce the vehicle speed comprising reducing a pressure within the at least one clutch (72).

8. The method of claim 1, further comprising:
- receiving, with the controller (102), a second speed command signal from the input device (108), the second speed command signal instructing the controller (102) to increase the vehicle speed from zero to a commanded speed; and
- proportionally disengaging the parking brake (78) as an on-coming clutch (72) of the power shift transmission (24) is engaged.

9. A system for controlling the operation of a work vehicle (10), the system comprising:
- a power shift transmission (24) including an input shaft (30), an output shaft (38) and at least one clutch (72);
- a parking brake (78) operatively connected to the output shaft (38);
- a proportional valve (106) configured to regulate a pressure within the parking brake (78);
- an input device (108) configured to allow an operator to command a vehicle speed of the work vehicle (10); and
- a controller (102) communicatively coupled to the power shift transmission (24), the proportional valve (106) and the input device (108), the controller (102) being configured to:
- receive a speed command signal from the input device (108) instructing the controller (102) to reduce the vehicle speed to zero;
- control the at least one clutch (72) of the power shift transmission (24) in order to initially reduce the vehicle speed; and
**characterized in that** said controller being configured further to
- control the proportional valve (106) in order to proportionally apply the parking brake (78) to reduce the vehicle speed to zero.

10. The system of claim 9, wherein the parking brake (78) is proportionally applied by gradually decreasing the pressure within the parking brake (78).

11. The system of claim 10, wherein the pressure within the parking brake (78) is decreased as a function of an output speed of the power shift transmission (24).

12. The system of claim 9, wherein the controller (102) is further configured to receive an initial speed command signal instructing the controller (102) to increase the vehicle speed from zero, the controller (102) being configured to slip an on-coming clutch (72) of the power shift transmission (24) until the speed command signal is received instructing the controller (102) to reduce the vehicle speed to zero.

13. The system of claim 9, wherein the controller (102) is configured to downshift the power shift transmission (24) in order to initially reduce the vehicle speed.

14. The system of claim 9, wherein the controller (102) is configured to reduce a pressure within the at least one clutch (72) in order to initially reduce the vehicle speed.

## Patentansprüche

1. Verfahren zum Steuern des Betriebs eines Arbeitsfahrzeugs mit Lastschaltgetriebe, aufweisend:
- Entgegennehmen eines Geschwindigkeitsbefehlssignals mit einer Steuerung von einer Eingabevorrichtung (202), wobei das Geschwindigkeitsbefehlssignal die Steuerung instruiert, eine Fahrzeuggeschwindigkeit des Arbeitsfahrzeugs auf null zu reduzieren;
- Steuern wenigstens einer Kupplung des Lastschaltgetriebes, um anfänglich die Fahrzeuggeschwindigkeit zu reduzieren (204); und
**dadurch gekennzeichnet, dass** das Verfahren außerdem folgenden weiteren Schritt aufweist:
- proportionales Anwenden einer Parkbremse des Arbeitsfahrzeugs, um die Fahrzeuggeschwindigkeit auf null zu reduzieren (206).

2. Verfahren nach Anspruch 1, wobei das proportionale Betätigen einer Parkbremse (78) des Arbeitsfahrzeugs (10) den Schritt umfasst, einen Druck innerhalb der Parkbremse (78) zu regulieren.

3. Verfahren nach Anspruch 2, wobei der Druck innerhalb der Parkbremse (78) reguliert wird als Funktion einer Ausgabegeschwindigkeit des Lastschaltgetriebes (24).

4. Verfahren nach Anspruch 2, wobei das Arbeitsfahrzeug (10) ein Proportionalventil (106) umfasst, das dazu ausgestaltet ist, den Druck innerhalb der Parkbremse (78) zu regulieren.

5. Verfahren nach Anspruch 1, des Weiteren mit:
- Entgegennehmen eines Anfangsgeschwindigkeitsbefehlssignals, das die Steuerung (102) instruiert, die Fahrzeuggeschwindigkeit von null zu erhöhen;
- Schleifen lassen einer einrückenden Kupplung des Lastschaltgetriebes (24), bis das Geschwindigkeitsbefehlssignal empfangen wird, welches die Steuerung (102) instruiert, die Fahrzeuggeschwindigkeit auf null zu reduzieren.

6. Verfahren nach Anspruch 1, wobei das Steuern wenigstens einer Kupplung (72) des Lastschaltgetriebes (24), um die Fahrzeuggeschwindigkeit zu reduzieren, den Schritt umfasst, das Lastschaltgetriebe (24) herunterzuschalten.

7. Verfahren nach Anspruch 1, wobei das Steuern wenigstens einer Kupplung (72) des Lastschaltgetriebes (24), um die Fahrzeuggeschwindigkeit zu reduzieren, den Schritt umfasst, einen Druck innerhalb der wenigstens einen Kupplung (72) zu reduzieren.

8. Verfahren nach Anspruch 1, des Weiteren aufweisend:
- Entgegennehmen eines zweiten Geschwindigkeitsbefehlssignals mit der Steuerung (102) von der Eingabevorrichtung (108), wobei das zweite Geschwindigkeitsbefehlssignal die Steuerung (102) instruiert, die Fahrzeuggeschwindigkeit von null auf eine vorgegebene Geschwindigkeit zu erhöhen; und
- proportionales Lösen der Parkbremse (78), wenn eine einrückende Kupplung (72) des Lastschaltgetriebes (24) einrückt.

9. System zum Steuern des Betriebs eines Arbeitsfahrzeugs (10), wobei das System aufweist:
- ein Lastschaltgetriebe (24) mit einer Eingangswelle (30), einer Ausgangswelle (38) und wenigstens einer Kupplung (72);
- eine Parkbremse (78), die wirkend mit der Ausgangswelle (38) verbunden ist;
- ein Proportionalventil (106), das dazu ausgestaltet ist, einen Druck innerhalb der Parkbremse (78) zu regulieren;
- eine Eingabevorrichtung (108), die dazu ausgestaltet ist, es einem Bediener zu ermöglichen, eine Fahrzeuggeschwindigkeit des Arbeitsfahrzeugs (10) vorzugeben; und
- eine Steuerung (102) in Kommunikationsverbindung mit dem Lastschaltgetriebe (24), dem Proportionalventil (106) und der Eingabevorrichtung (108), wobei die Steuerung (102) für folgende Schritte ausgestaltet ist:
- Entgegennehmen eines Geschwindigkeitsbefehlssignals von der Eingabevorrichtung (108), das die Steuerung (102) instruiert, die Fahrzeuggeschwindigkeit auf null zu reduzieren;
- Steuern der wenigstens einen Kupplung (72) des Lastschaltgetriebes (24), um die Fahrzeuggeschwindigkeit anfänglich zu reduzieren; und
**dadurch gekennzeichnet, dass** die Steuerung außerdem dazu ausgestaltet ist,
- das Proportionalventil (106) zu steuern, um die Parkbremse (78) proportional anzuwenden, um die Fahrzeuggeschwindigkeit auf null zu reduzieren.

10. System nach Anspruch 9, wobei die Parkbremse (78) proportional angewendet wird, indem der Druck innerhalb der Parkbremse (78) allmählich reduziert wird.

11. System nach Anspruch 10, wobei der Druck innerhalb der Parkbremse (78) als eine Funktion einer Ausgangsgeschwindigkeit des Lastschaltgetriebes (24) reduziert wird.

12. System nach Anspruch 9, wobei die Steuerung (102) außerdem dazu ausgestaltet ist, ein Anfangsgeschwindigkeitsbefehlssignal entgegenzunehmen, das die Steuerung (102) instruiert, die Fahrzeuggeschwindigkeit von null zu erhöhen, wobei die Steuerung (102) dazu ausgestaltet ist, eine einrückende Kupplung (72) des Lastschaltgetriebes (24) schleifen zu lassen, bis das Geschwindigkeitsbefehlssignal entgegengenommen wird, das die Steuerung (102) instruiert, die Fahrzeuggeschwindigkeit auf null zu reduzieren.

13. System nach Anspruch 9, wobei die Steuerung (102) dazu ausgestaltet ist, das Lastschaltgetriebe (24) herunterzuschalten, um die Fahrzeuggeschwindigkeit anfänglich zu reduzieren.

14. System nach Anspruch 9, wobei die Steuerung (102) dazu ausgestaltet ist, einen Druck innerhalb der wenigstens einen Kupplung (72) zu reduzieren, um die Fahrzeuggeschwindigkeit anfänglich zu reduzieren.

## Revendications

1. Méthode de commande de l'opération d'un véhicule de travail comprenant une transmission power shift, la méthode comprenant :
- la réception, avec un dispositif de commande, d'un signal de commande de vitesse d'un dispositif d'entrée (202), le signal de commande de vitesse commandant le dispositif de commande de réduire une vitesse de véhicule du véhicule de travail à zéro ;
- la commande d'au moins un embrayage de la transmission power shift afin de réduire initialement la vitesse du véhicule (204) ; et
**caractérisée en ce que** la méthode comprend l'étape supplémentaire :
- d'appliquer proportionnellement un frein de stationnement du véhicule de travail afin de réduire la vitesse du véhicule à zéro (206).

2. Méthode selon la revendication 1, selon laquelle l'application proportionnelle d'un frein de stationnement (78) du véhicule de travail (10) comprend la régulation d'une pression au sein du frein de stationnement (78).

3. Méthode selon la revendication 2, selon laquelle la pression au sein du frein de stationnement (78) est régulée en fonction d'une vitesse de sortie de la transmission power shift (24).

4. Méthode selon la revendication 2, selon laquelle le véhicule de travail (10) comprend une soupape proportionnelle (106) configurée afin de réguler la pression au sein du frein de stationnement (78).

5. Méthode selon la revendication 1, comprenant en outre :
- la réception d'un signal initial de commande de vitesse, commandant le dispositif de commande (102) d'augmenter la vitesse du véhicule à partir de zéro ;
- le patinage d'un embrayage venant en engagement de la transmission power shift (24) jusqu'à ce que le signal de commande de vitesse soit reçu, commandant le dispositif de commande (102) de réduire la vitesse du véhicule à zéro.

6. Méthode selon la revendication 1, selon laquelle la commande d'au moins un embrayage (72) de la transmission power shift (24) afin de réduire la vitesse du véhicule comprend la rétrogradation de la transmission power shift (24).

7. Méthode selon la revendication 1, selon laquelle la commande d'au moins un embrayage (72) de la transmission power shift (24) afin de réduire la vitesse du véhicule comprend la réduction d'une pression au sein du au moins un embrayage (72).

8. Méthode selon la revendication 1, comprenant en outre :
- la réception, avec le dispositif de commande (102), d'un deuxième signal de commande de vitesse du dispositif d'entrée (108), le deuxième signal de commande de vitesse commandant le dispositif de commande (102) d'augmenter la vitesse du véhicule de zéro à une vitesse commandée ; et
- le lâchage proportionnel du frein de stationnement (78) selon l'engagement de l'embrayage venant en engagement (72) de la transmission power shift (24).

9. Système de commande de l'opération d'un véhicule de travail (10), le système comprenant :
- une transmission power shift (24) comprenant un arbre d'entrée (30), un arbre de sortie (38) et au moins un embrayage (72) ;
- un frein de stationnement (78) connecté fonctionnellement à l'arbre de sortie (38) ;
- une soupape proportionnelle (106) configurée afin de réguler une pression au sein du frein de stationnement (78) ;
- un dispositif d'entrée (108) configuré afin de permettre à un opérateur de commander une vitesse de véhicule du véhicule de travail (10) ; et
- un dispositif de commande (102) couplé de manière communicative à la transmission power shift (24), à la soupape proportionnelle (106) et au dispositif d'entrée (108), le dispositif de commande (102) étant configuré afin :
- de recevoir un signal de commande de vitesse du dispositif d'entrée (108), commandant le dispositif de commande (102) de réduire la vitesse du véhicule à zéro ;
- de commander le au moins un embrayage (72) de la transmission power shift (24) afin de réduire initialement la vitesse du véhicule ; et
**caractérisé en ce que** ledit dispositif de commande est configuré en outre afin :
- de commander la soupape proportionnelle (106) afin d'appliquer le frein de stationnement (78) proportionnellement afin de réduire la vitesse du véhicule à zéro.

10. Système selon la revendication 9, dans lequel le frein de stationnement (78) est appliqué proportionnellement en réduisant graduellement la pression au sein du frein de stationnement (78).

11. Système selon la revendication 10, dans lequel la pression au sein du frein de stationnement (78) est réduite en fonction d'une vitesse de sortie de la transmission power shift (24).

12. Système selon la revendication 9, dans lequel le dispositif de commande (102) est en outre configuré afin de recevoir un signal initial de commande de vitesse commandant le dispositif de commande (102) d'augmenter la vitesse du véhicule à partir de zéro, le dispositif de commande (102) étant configuré afin de faire patiner un embrayage venant en engagement (72) de la transmission power shift (24) jusqu'à la réception du signal de commande de vitesse commandant le dispositif de commande (102) de réduire la vitesse du véhicule à zéro.

13. Système selon la revendication 9, dans lequel le dispositif de commande (102) est configuré afin de rétrograder la transmission power shift (24) afin de réduire initialement la vitesse du véhicule.

14. Système selon la revendication 9, dans lequel le dispositif de commande (102) est configuré afin de réduire une pression au sein du au moins un embrayage (72) afin de réduire initialement la vitesse du véhicule.
